# EUROPEAN PATENT SPECIFICATION

(11) **EP 2 750 336 B1**
(45) Date of publication and mention of the grant of the patent: **16.03.2016**
(21) Application number: 12846441.9
(22) Date of filing: 24.10.2012
(51) Int. Cl.: H04L 12/437, H04L 12/46

(54) **INTER-LOOP SERVICE PROTECTION METHOD AND APPARATUS**
VERFAHREN UND VORRICHTUNG ZUM SCHUTZ EINES INTER-LOOP-SERVICE
PROCÉDÉ ET APPAREIL DE PROTECTION DE SERVICE INTER BOUCLE

(30) Priority: 03.11.2011 CN 201110343594
(43) Date of publication of application: 02.07.2014
(73) Proprietor: ZTE Corporation, Shenzhen, Guangdong 518057 (CN)
(72) Inventor: QU, Yanfeng, Shenzhen Guangdong 518057 (CN); YANG, Hui, Shenzhen Guangdong 518057 (CN); LIU, Guoman, Shenzhen Guangdong 518057 (CN); MA, Yuxia, Shenzhen Guangdong 518057 (CN)
(74) Representative: Awapatent AB
(86) International application number: PCT/CN2012/083410
(87) International publication number: WO 2013/064027

(56) References cited:
- EP-A1- 1 804 406
- WO-A1-2010/116465
- CN-A- 1 949 766
- CN-A- 101 188 541
- CN-A- 101 582 848
- JP-A- H08 214 019
- US-A1- 2009 196 202
- US-B1- 7 545 735

## Description

### Technical Field

The present document relates to the field of inter-ring service technologies, and in particular, to an inter-ring service protection method and apparatus.

### Background of the Related Art

At present, the protection of inter-ring services is mainly implemented through intra-ring protection and end-to-end linear protection. In the specific implementation method, it is detected whether there is a failure in the ring through the intra-ring fault detection, and if there is a fault, the intra-ring protection is started for protection and recovery of the inter-ring services; and if the intra-ring protection resources are unavailable, the linear end-to-end protection is started through the Link Defect Indication (LDI) and the hold off time of the client layer.

In the existing inter-ring protection method, it always needs to configure an end-to-end inter-ring protection path for the inter-ring services, and the configuration has a large workload and has certain difficulties.

EP1804406A1 discloses a method of establishing a cross-ring protection path which bypasses an off-ring node or an on-ring node of the working path, and binding the protection path and the working path.

US7545735B1 discloses a scalable protection mechanism for hierarchical multicast service in ring based networks.

WO2010/116465A1 discloses a ring node device functioning as a pair node of a multi-ring network system for relaying as relay data, data transmitted and received via a relay rink of one set of pair nodes between different ring networks.

US2009/196202A1 discloses a transmitting apparatus in a network constituted of a plurality of rings connected via a plurality of routes includes a node type determining unit and a backup path setting message transmitting unit.

CN101582848A discloses a cross-ring protection method of a resilient packet ring (RPR).

CN101188541A discloses an elastic grouping ring RPR bridge redundant protection method and a system.

CN1949766A discloses a method for making label allocation on ring network, calculating routing distance and implementing backup switching.

JPH08214019A discloses a method to detect a fault of a standby system link without disturbing a current communication state by allowing a standby system physical connection monitor means to execute periodically the connection processing before changeover of a transmission line actually among connection sequence processing sets.

### Summary of the Invention

The embodiments of the present document provide an inter-ring service protection method and apparatus, which need not to configure the end-to-end inter-ring protection path, thus reducing the complexity of the configuration.

In order to solve the above technical problems, the embodiments of the present document provide an inter-ring service protection method as defined in present independent claim 1, comprising:
for inter-ring services with the same inter-ring node and destination node, configuring a shared tunnel for the inter-ring services on the same ring which the inter-ring services pass through, and on an inter-ring node, performing inter-ring tunnel binding, designating a master inter-ring node and a standby inter-ring node, and binding tunnels for each inter-ring service on an ingress node and an egress node of the inter-ring service; and
detecting whether there is a status change in the ring which the inter-ring services pass through, and performing protection switching or switchback processing when there is a status change.

The method further comprises:
for inter-ring services with the same inter-ring node and destination node, respectively configuring tunnels for the inter-ring services on the different rings which the inter-ring services pass through.

The step of performing inter-ring tunnel binding on an inter-ring node comprises:
for inter-ring services with the same inter-ring node and destination node, binding the shared tunnel which the inter-ring services pass through on the same ring and the tunnels configured respectively which the inter-ring services pass through on different rings as one tunnel.

The step of configuring a shared tunnel for the inter-ring services on the same ring which the inter-ring services pass through comprises:
for inter-ring services with the same inter-ring node and destination node, configuring a shared working tunnel and a protection tunnel for the inter-ring services on the same ring which the inter-ring services pass through.

The step of detecting whether there is a status change in the ring which the inter-ring services pass through comprises:
detecting whether there is a status change in the ring which the inter-ring services pass through by a fault detection message, and if there is a status change in the ring, notifying the nodes on the ring of the status change information, wherein, the status change includes fault occurrence and fault disappearance.

The step of performing protection switching or switchback processing when there is a status change comprises: the node which receives the status change information performing protection switching or switchback processing by means of:
when the status change is fault occurrence and the fault influences the traffic of the working tunnel and the master inter-ring node needs to be switched, the nodes in the fault ring switching the traffic on the working tunnel onto the protection tunnel, and transmitting the traffic on the protection tunnel to the standby inter-ring node, wherein the standby inter-ring node transmits the traffic on the working tunnel or protection tunnel of the next ring according to the fault condition of the next ring.

The step of performing protection switching or switchback processing when there is a status change comprises: the node which receives the status change information performing protection switching or switchback processing by means of:
when the status change is fault occurrence and the fault influences the traffic of the working tunnel and the master inter-ring node needs not to be switched, the nodes in the fault ring switching the traffic of the inter-ring services on the working tunnel onto the protection tunnel, and transmitting the traffic on the protection tunnel to the master inter-ring node.

The embodiments of the present document further provide an inter-ring service protection apparatus, comprising a tunnel configuration module, a fault detection module, a fault notification module and a protection switch module, wherein,
the tunnel configuration module is configured to, for inter-ring services with the same inter-ring node and destination node, configure a shared tunnel for the inter-ring services on the same ring which the inter-ring services pass through, and on an inter-ring node, perform inter-ring tunnel binding, designate a master inter-ring node and a standby inter-ring node, and bind tunnels for each inter-ring service on the ingress node and egress node of the inter-ring service; and
the fault detection module is configured to detect whether there is a status change in the ring which the inter-ring services pass through;
the fault notification module is configured to notify the nodes on the ring of the status change information when the fault detection module detects a status change; and
the protection switch module is configured to perform protection switching or switchback processing when there is a status change in the ring which the inter-ring services pass through.

The tunnel configuration module is further configured to, for inter-ring services with the same inter-ring node and destination node, respectively configure tunnels for the inter-ring services on the different rings which the inter-ring services pass through.

The tunnel configuration module is configured to perform inter-ring tunnel binding by means of: for inter-ring services with the same inter-ring node and destination node, binding the shared tunnel which the inter-ring services pass through on the same ring and the tunnels configured respectively which the inter-ring services pass through on different rings as one tunnel.

The tunnel configuration module is configured to configure a shared tunnel for the inter-ring services by means of: for inter-ring services with the same inter-ring node and destination node, configuring a shared working tunnel and a protection tunnel for the inter-ring services on the same ring which the inter-ring services pass through.

The protection switch module is configured to perform protection switching or switchback processing by means of: when the status change is fault occurrence and the fault influences the traffic of the working tunnel and the master inter-ring node needs to be switched, switching the traffic on the working tunnel onto the protection tunnel, transmitting the traffic on the protection tunnel to the standby inter-ring node, and transmitting the traffic on the working tunnel or protection tunnel of the next ring according to the fault condition of the next ring.

The protection switch module is configured to perform protection switching or switchback processing by means of: when the status change is fault occurrence and the fault influences the traffic of the working tunnel and the master inter-ring node needs not to be switched, switching the traffic of the inter-ring services on the working tunnel onto the protection tunnel, and transmitting the traffic on the protection tunnel to the master inter-ring node.

In conclusion, the present document can avoid establishing a corresponding inter-ring protection path for each inter-ring service, thus reducing configuration complexity; in addition, for inter-ring services with the same single-ring out-ring node (inter-ring node) and destination node on the ring, they can be aggregated onto a shared working tunnel or protection tunnel for transmission, thus reducing the workload of configuring the working tunnel and the protection tunnel.

### Brief Description of Drawings

Fig. 1 is a flowchart of an inter-ring service protection method according to an embodiment of the present document;
Fig. 2 is a diagram of a configuration relationship of multi-ring double-node interconnected and shared tunnel according to an embodiment of the present document;
Fig. 3 is a flowchart of inter-ring service protection based on a shared tunnel according to an embodiment of the present document;
Fig. 4 is a diagram of protection switch when there is a fault in the multi-ring double-node interconnected ring according to an embodiment of the present document;
Fig. 5 is a diagram of switching a master inter-ring node caused by multiple link faults in the ring according to an embodiment of the present document;
Fig. 6 is a diagram of protection switch when there is a fault in the master inter-ring node according to an embodiment of the present document; and
Fig. 7 is architecture of an inter-ring service protection apparatus according to an embodiment of the present document.

### Preferred Embodiments of the Invention

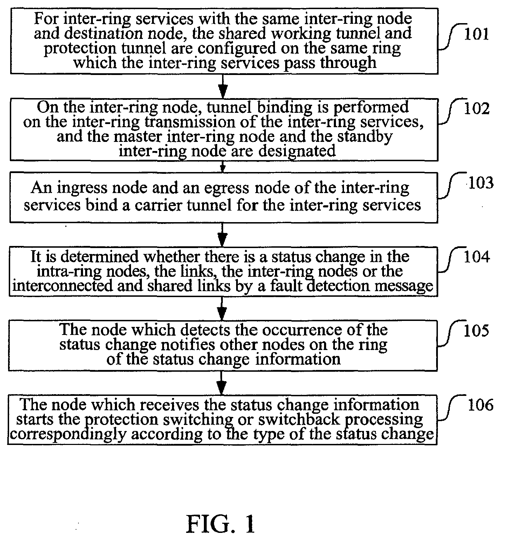

As shown in Fig. 1, an inter-ring service protection method according to the present embodiment comprises the following steps.

In step 101, for inter-ring services with the same single-ring out-ring node (inter-ring node) and a destination out-ring node (destination node), the shared working tunnel and protection tunnel are configured for the inter-ring services on the same ring which the inter-ring services pass through;
for inter-ring services with the same inter-ring node and destination node, tunnels need to be configured for the inter-ring services on different rings which the inter-ring services pass through.

The destination out-ring node is not necessarily the actual destination node of the inter-ring services, and it may be a destination out-ring node on multiple rings.

In step 102, on the inter-ring node, tunnel binding is performed on the inter-ring transmission of the inter-ring services, and the master inter-ring node and the standby inter-ring node are designated;

Performing tunnel binding on the inter-ring transmission of the inter-ring services is that, for inter-ring services with the same inter-ring node and destination node, the shared tunnel which the inter-ring services pass through on the same ring and the tunnels configured respectively which the inter-ring services pass through on different rings are bound as one tunnel.

In step 103, an ingress node and an egress node of the inter-ring services bind a carrier tunnel for the inter-ring services;
a carrier tunnel is bound for the inter-ring services, so that the inter-ring services can be transmitted to an out-ring node of another ring through the working tunnel and the protection tunnel. The inter-ring services can be for example services such as a Label Switched Path (LSP), an IP and Pseudo-Wire (PW) etc.

In step 104, it is determined whether there is a status change in the intra-ring nodes, the links, the inter-ring nodes or the interconnected and shared links by a fault detection message, wherein, the status change includes fault occurrence and fault disappearance.

In step 105, the node which detects the occurrence of the status change notifies other nodes on the ring of the status change information;

In step 106, the node which receives the status change information starts the protection switching or switchback processing correspondingly according to the type of the status change.

The status change includes two conditions, i.e., fault occurrence and fault disappearance. When the fault occurs, the protection switching is performed, and when the fault disappears, the protection switchback is performed, wherein, the protection switchback process is an inverse process of the protection switching process.

The processing flow of the protection switching when a fault occurs will be described in detail below.

For the inter-ring node, the fault on the ring includes: a fault by which the traffic transmission of the tunnel is influenced but master inter-ring node switching needs not to be performed, and a fault by which master inter-ring node switching needs to be performed. Both faults can be distinguished by corresponding deployments in the fault detection module, and will not be described here again.

For the fist fault, the purpose of protection can be achieved by master and standby switching in a single ring; and for the second fault, all the traffics, which originally are transmitted to the adjacent ring via the master inter-ring node, need to be switched to the protection tunnel to be transmitted to the standby inter-ring node, and the standby inter-ring node transmits the traffics to the adjacent ring according to the inter-ring tunnel binding relationship, and on the adjacent ring, it is further determined whether to perform corresponding intra-ring protection switching according to the fault condition.

The inter-ring service protection method according to the present embodiment will be described in conjunction with accompanying drawings below.

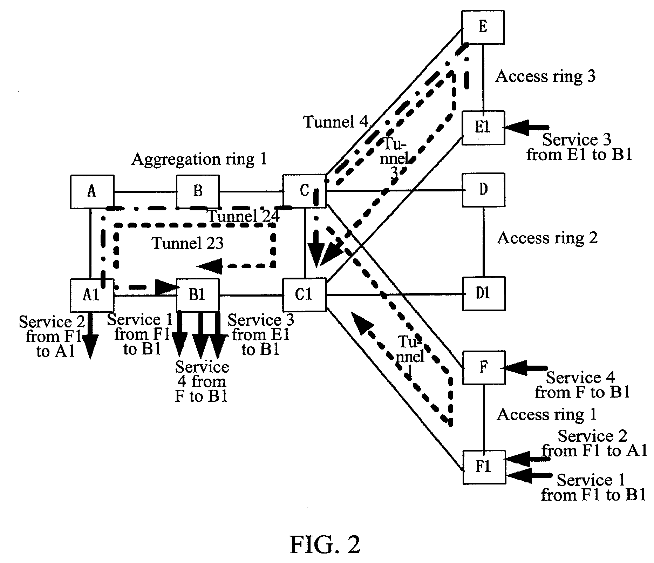

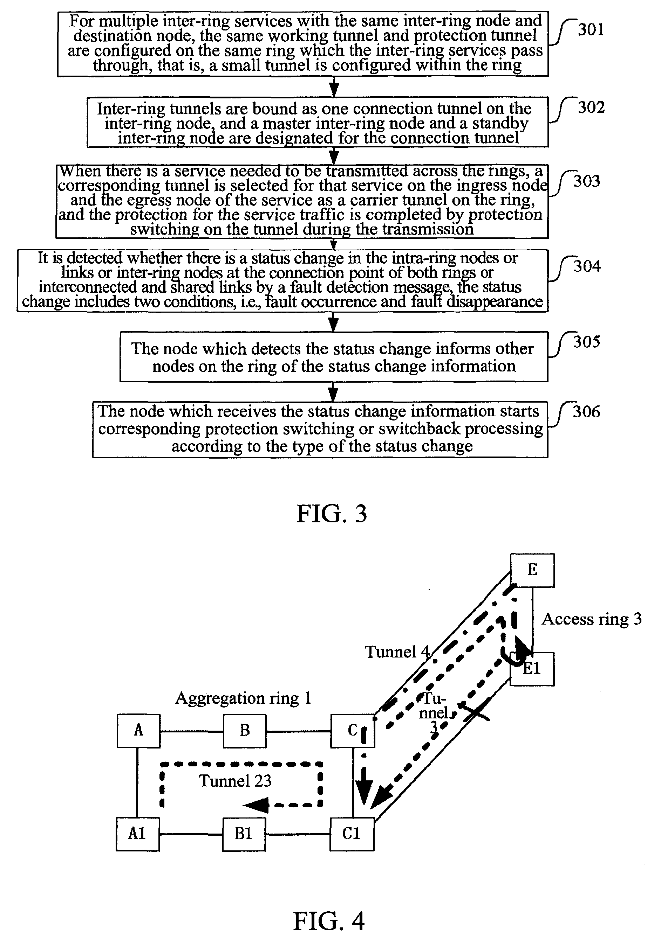

In the multi-ring multi-node interconnected network as shown in Fig. 2, an aggregation ring 1 and three access rings are interconnected through a node C and a node C1. Under normal conditions, a service 1 from F1 to B1 is transmitted along a path F1-C1-B1, a service 2 from F1 to A1 is transmitted along a path F1-C1-B1-A1, a service 3 from E1 to B1 is transmitted along a path E1-C1-B1, and a service 4 from F to B1 is transmitted along a path F-F1-C1-B1. As shown in Fig. 3, an inter-ring service protection method according to the present embodiment includes the following steps.

In step 301, for multiple inter-ring services with the same inter-ring node and destination node, the same working tunnel and protection tunnel are configured on the same ring which the inter-ring services pass through, that is, a small tunnel is configured within the ring.

For the above services 1-4, the node C1 is a master inter-ring node on the access ring (an inter-ring node when the network is normal), and the node C is a standby inter-ring node on the access ring. In the uplink service direction, the services 1, 3 and 4 on the aggregation ring share the tunnel23.

Although both the transmission paths of services 1 and 2 on the access ring 1 are F1∼C1 (C1 is a master inter-ring node of two services on the access node), as the destination nodes are different (the destination node of service 1 is B1, and the destination node of service 2 is A1), the service transmission processes of services 1 and 2 on the access ring do not share the same working tunnel, and the access ring 1 needs to create clockwise annular working tunnels for services 1 and 2 respectively.

Services 1 and 4 share the same working tunnel and protection tunnel on the access ring and the aggregation ring. As illustrated, tunnel1 is shared on the access ring 1, tunnel23 is shared and the protection tunnel corresponding to the working tunnel is shard on the aggregation ring.

Although services 3 and 1 are on different access rings, in the transmission processes on the aggregation ring, they share the same working tunnel (the clockwise annular working tunnel23 with B1 being an out-ung node).

In step 302, inter-ring tunnels are bound as one connection tunnel on the multi-ring intersection node (inter-ring node), and a master inter-ring node and a standby inter-ring node are designated for the connection tunnel;

In Fig. 3, all the uplink services 1, 3 and 4 correspond to tunnel23 on the aggregation ring, and therefore, on the inter-ring nodes C and C1, it needs to establish a binding relationship of 1:n among tunnel23 and tunnel1, tunnel 3, so as to bind tunnel23, tunnel 1 and tunnel 3 as a large tunnel, i.e., tunnel (C1B1). On the node C1, the traffic transmitted along tunnel1 and tunnel3 is label switched, and is uniformly aggregated onto tunnel 23 and transmitted to the B 1 node; and meanwhile, on the nodes C and C1, the master inter-ring node designated for tunnel (C1B1) is C1, and the standby inter-ring node designated for tunnel (C1B1) is C.

In addition, in contrast to the uplink services, for the downlink services corresponding to services 1, 3 and 4, i.e., services from B1 to F1, E1 and F, since the destination nodes are different, corresponding small tunnels on the aggregation ring are also different, i.e., these downlink services correspond to 3 large tunnels, and one small aggregation tunnel and one small access tunnel are bound in each large tunnel.

In step 303, when there is a service needed to be transmitted across the rings, a corresponding tunnel is selected for that service on the ingress node and the egress node of the service as a carrier tunnel on the ring, and the protection for the service traffic is completed by protection switching on the tunnel during the transmission.

Except that there are configurations for a service on the ingress node and the egress node, there is no information about the service on other nodes of the ring.

As shown in Fig. 4, service 3 binds its corresponding working tunnel3 and protection tunnel4 on the ingress node E1, and binds its corresponding working tunnel23 and protection tunnel24 on the egress node B1, and there is no information related to service 3 on other nodes (including the corresponding inter-ring nodes C and C1).

In step 304, it is detected whether there is a status change in the intra-ring nodes or links or inter-ring nodes at the connection point of both rings or interconnected and shared links by a fault detection message (such as Continuity Check& Connectivity Verification (CC&CV), Bidirectional Forward Detection (BFD) etc.), the status change includes two conditions, i.e., fault occurrence and fault disappearance.

In step 305, the node which detects the status change informs other nodes on the ring of the status change information;

In step 306, the node which receives the status change information starts corresponding protection switching or switchback processing according to the type of the status change;

The status change here includes two conditions, i.e., fault occurrence and fault disappearance. When a fault occurs, the protection switching is performed, and when the fault disappears, the protection switchback is performed, wherein, the protection switchback process is an inverse process of the protection switching process.

For the inter-ring node, the fault on the ring can be divided into two kinds: a fault by which the traffic transmission of the tunnel is influenced but master inter-ring node switching needs not to be performed, and a fault by which master inter-ring node switching needs to be performed.

For the first kind of fault, the purpose of protection can be achieved by master and standby switching in a single ring. As shown in Fig. 4, a fault occurs in the link between E1 and C1, and tunnel3 is switched to a corresponding tunnel4 on the E1 node and the traffic is transmitted to the C1 node. That is, as shown in the dot dash line in the figure, the service 3 from E1 to B1 is transmitted along E1-E-C-C1-B1 after the protection switching.

For the second fault, all the traffics, which originally are transmitted to the adjacent ring via the master inter-ring node, need to be switched to the protection tunnel and to be transmitted to the standby inter-ring node, and the traffics are transmitted to the adjacent ring by the standby inter-ring node according to the inter-ring tunnel binding relationship. On the adjacent ring, it only needs to further determine whether to perform corresponding intra-ring protection switching according to the fault condition.

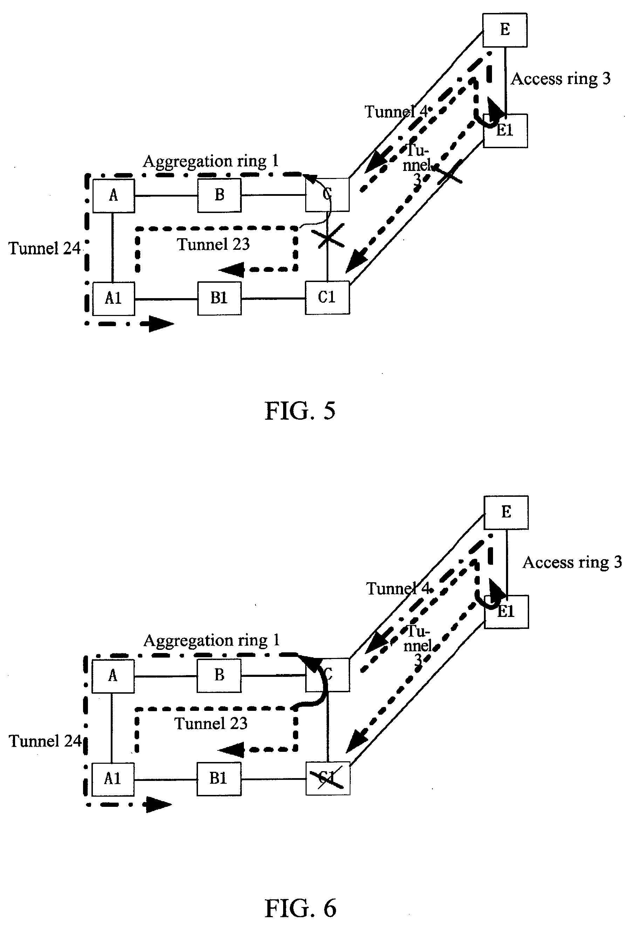

As shown in Fig. 5, when fault occurs simultaneously on the link between C and C1 as well as the link between E1 and C1, the standby inter-ring node C detects that the traffic can not be transmitted through the master inter-ring node C1, and the traffic must be switched to the standby inter-ring node C to exit the ring. That is, after the traffic of tunnel3 is switched to tunnel4 on the node E1, when the traffic is transmitted to the node C along tunnel4, the node C switched the traffic received from the tunnel4 onto the aggregation ring to be transmitted according to the configured tunnel binding relationship. At the same time, the in-ring node of the aggregation ring selects to transmit the traffic to the destination node B1 along tunnel24 according to the fault condition. That is, as shown in the dot dash line in the Fig. 5, the service 3 from E1 to B1 is transmitted along E1-E-C-B-A-A1-B1 after the protection switching;

As shown in Fig. 6, a fault occurs on the C1 node, i.e., there is a node fault in the master inter-ring node of tunnel3, and the traffic must be switched to the standby inter-ring node C to exit the ring. The traffic switching process in this condition is the same as that illustrated in Fig. 5.

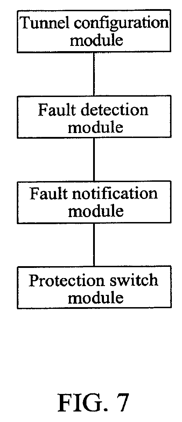

As shown in Fig. 7, the inter-ring service protection apparatus according to the present embodiment comprises a tunnel configuration module, a fault detection module, a fault notification module and a protection switch module, wherein,
the tunnel configuration module is configured to for inter-ring services with the same inter-ring node and destination node, configure a shared tunnel for the inter-ring services on the same ring which the inter-ring services pass through, respectively configure tunnels for the inter-ring services on the different rings which the inter-ring services pass through, and on an inter-ring node, perform inter-ring tunnel binding, designate a master inter-ring node and a standby inter-ring node, and bind tunnels for each inter-ring service on the ingress node and egress node of the inter-ring service; and
the fault detection module is configured to detect whether there is a status change in the ring which the inter-ring services pass through;
the fault notification module is configured to notify the nodes on the ring of the status change information when the fault detection module detects a status change; and
the protection switch module is configured to perform protection switching or switchback processing when there is a status change in the ring which the inter-ring services pass through.

The tunnel configuration module is configured to perform inter-ring tunnel binding on the inter-ring node by means of: for inter-ring services with the same inter-ring node and destination node, binding the shared tunnel which the inter-ring services pass through on the same ring and the tunnels configured respectively which the inter-ring services pass through on different rings as one tunnel.

The tunnel configuration module is configured to configure a shared tunnel on the same ring which the inter-ring services pass through for the inter-ring services by means of: for inter-ring services with the same inter-ring node and destination node, configuring a shared working tunnel and a protection tunnel for the inter-ring services on the same ring which the inter-ring services pass through.

The protection switch module is configured to perform protection switching or switchback processing by means of: when the status change is fault occurrence and the fault influences the traffic of the working tunnel and the master inter-ring node needs to be switched, switching the traffic on the working tunnel onto the protection tunnel, transmitting the traffic on the protection tunnel to the standby inter-ring node, and transmitting the traffic on the working tunnel or protection tunnel of the next ring according to the fault condition of the next ring, or
when the status change is fault occurrence and the fault influences the traffic of the working tunnel and the master inter-ling node needs not to be switched, switching the traffic of the inter-ring services on the working tunnel onto the protection tunnel, and transmitting the traffic on the protection tunnel to the master inter-ring node.

Obviously, those skilled in the art should understand that each module or each step of the aforementioned present document can be implemented with general computing apparatuses, and can be integrated into a single computing apparatus, or distributed in a network consisting of a plurality of computing apparatuses; alternatively, they can be implemented with program codes executable by the computing apparatuses, and therefore, they can be stored in storage apparatuses to be executed by the computing apparatuses, and under some conditions, the steps which are illustrated and described can be implemented in an order different from that described here; alternatively, they are respectively made into a plurality of integrated circuit modules; alternatively, several modules or steps thereof are made into a single integrated circuit module to implement. Thus, the present document is not limited to any specific combinations of hardware and software.

The above description is only the preferred embodiments of the present document and is not intended to limit the present document. The invention can have a variety of changes and variations for those skilled in the art.

### Industrial Applicability

The method and apparatus provided by the embodiments of the present document can avoid establishing a corresponding inter-ring protection path for each inter-ring service, thus reducing configuration complexity; in addition, for inter-ring services with the same single-ring out-ring node (inter-ring node) and destination node on the ring, they can be aggregated onto a shared working tunnel or protection tunnel for transmission, thus reducing the workload of configuring the working tunnel and the protection tunnel.

## Claims

1. An inter-ring service protection method, comprising:
for inter-ring service (1), from F1 to C1 to B1 and service (3), from E1 to C1 to B1, with a same inter-ring node (C1) and destination node (B1),configuring a shared tunnel, Tunnel (23), the C1 to B1 part, for the inter-ring services (1, 3) on a same ring, Aggregation ring (1), which the inter-ring services (1,3) pass through, and on the inter-ring node (C1), performing inter-ring tunnel binding, designating a master inter-ring node (C1) and a standby inter-ring node (C), and binding tunnels for each inter-ring service on an ingress node and an egress node of the inter-ring service; and
detecting whether there is a status change in the ring which the inter-ring services (1, 3) pass through, and performing protection switching or switchback processing when there is a status change;
**characterized in that** the method further comprises:
for inter-ring service (1), from F1 to C1 to B1 and service (3), from E1 to C1 to B1, with a same inter-ring node (C1) and destination node (B1),respectively configuring tunnels for the inter-ring services (1, 3) on different rings, Access rings (1, 3), which the inter-ring services (1, 3) pass through;
wherein the step of performing inter-ring tunnel binding on an inter-ring node comprises:
for inter-ring service (1), from F1 to C1 to B1 and service (3), from E1 to C1 to B1, with a same inter-ring node (C1) and destination node (B1),binding the shared tunnel ,Tunnel (23), which the inter-ring services (1, 3) pass through on the same ring, Aggregation ring (1) and the tunnels (1, 3) configured respectively which the inter-ring services (1, 3) pass through on different rings, Access rings (1, 3) as one tunnel; and
wherein the step of configuring a shared tunnel for the inter-ring services on a same ring which the inter-ring services pass through comprises:
for inter-ring service (1), from F1 to C1 to B1 and service (3), from E1 to C1 to B1, with a same inter-ring node (C1) and destination node (B1), configuring a shared working tunnel ,Tunnel (23), the C1 to B1 part, and a protection tunnel, Tunnel (24), the C1 to C to B to A to A1 to B1 part, for the inter-ring services (1, 3) on the same ring, Aggregation ring (1), which the inter-ring services (1, 3) pass through.

2. The method according to claim 1, wherein the step of detecting whether there is a status change in the ring which the inter-ring services pass through comprises:
detecting whether there is a status change in the ring which the inter-ring services (1, 3) pass through by a fault detection message, and if there is a status change in the ring, notifying the nodes on the ring of the status change information, wherein the status change includes fault occurrence and fault disappearance.

3. The method according to claim 2, wherein the step of performing protection switching or switchback processing when there is a status change comprises:
a node which receives the status change information performing protection switching or switchback processing by means of:
when the status change is fault occurrence and the fault influences a traffic of the working tunnel, Tunnel (3) and the master inter-ring node (C1) needs to be switched, the nodes in a fault ring switching the traffic on the working tunnel, Tunnel (3), onto the protection tunnel, Tunnel (4), and transmitting the traffic on the protection tunnel, Tunnel (4) to the standby inter-ring node (C), and the standby inter-ring node (C) transmitting the traffic on the working tunnel, Tunnel (23) or protection tunnel, Tunnel (24) of a next ring, Aggregation ring (1), according to a fault condition of the next ring, Aggregation ring (1).

4. The method according to claim 2, wherein, the step of performing protection switching or switchback processing when there is a status change comprises: the node which receives the status change information performing protection switching or switchback processing by means of:
when the status change is fault occurrence and the fault influences the traffic of the working tunnel, Tunnel (3) and the master inter-ring node (C1) needs not to be switched, the nodes in the fault ring, Access ring (1), switching the traffic of the inter-ring services on the working tunnel, Tunnel (3) onto the protection tunnel, Tunnel (4), and transmitting the traffic on the protection tunnel, Tunnel (4) to the master inter-ring node (C1).

5. An inter-ring service protection apparatus, comprising a tunnel configuration module, a fault detection module, a fault notification module and a protection switch module, wherein,
the tunnel configuration module is configured to, for inter-ring service (1), from F1 to C1 to B1 and service (3), from E1 to C1 to B1, with a same inter-ring node (C1) and destination node (B1), configure a shared tunnel, Tunnel (23), the C1 to B1 part, for the inter-ring services (1, 3) on a same ring, Aggregation ring (1), which the inter-ring services (1, 3) pass through, and on the inter-ring node (C1), perform inter-ring tunnel binding, designate a master inter-ring node (C1) and a standby inter-ring node (C), and bind tunnels for each inter-ring service on an ingress node and an egress node of the inter-ring service; and
the fault detection module is configured to detect whether there is a status change in the ring which the inter-ring services (1, 3) pass through;
the fault notification module is configured to notify nodes on the ring of the status change information when the fault detection module detects a status change; and
the protection switch module is configured to perform protection switching or switchback processing when there is a status change in the ring which the inter-ring services (1, 3) pass through;
**characterized in that**
the tunnel configuration module is further configured to, for inter-ring service (1), from F1 to C1 to B1 and service (3), from E1 to C1 to B1, with a same inter-ring node (C1) and destination node (B1), respectively configure tunnels for the inter-ring services (1, 3) on different rings, Access rings (1, 3), which the inter-ring services (1, 3) pass through;
wherein the tunnel configuration module is configured to perform inter-ring tunnel binding by means of: for inter-ring service (1), from F1 to C1 to B1 and service (3), from E1 to C1 to B1, with a same inter-ring node (C1) and destination node (B1),
binding the shared tunnel, Tunnel (23), which the inter-ring services (1,3) pass through on the same ring, Aggregation ring (1) and the tunnels (1, 3) configured respectively which the inter-ring services (1, 3) pass through on different rings, Access rings (1, 3) as one tunnel; and
wherein the tunnel configuration module is configured to configure a shared tunnel for the inter-ring services by means of:
for inter-ling service (1), from F1 to C1 to B1 and service (3), from E1 to C1 to B1, with a same inter-ring node (C1) and destination node (B1), configuring a shared working tunnel, Tunnel (23), the C1 to B1 part, and a protection tunnel, Tunnel (24), the C1 to C to B to A to A1 to B1 part, for the inter-ring services (1, 3) on the same ring, Aggregation ring (1), which the inter-ring services (1, 3) pass through.

6. The apparatus according to claim 5, wherein the protection switch module is configured to perform protection switching or switchback processing by means of:
when the status change is fault occurrence and the fault influences a traffic of the working tunnel, Tunnel (3) and the master inter-ring node (C1) needs to be switched, switching the traffic on the working tunnel, Tunnel (3) onto the protection tunnel, Tunnel (4), transmitting the traffic on the protection tunnel, Tunnel (4) to the standby inter-ring node (C), and transmitting the traffic on the working tunnel, Tunnel (23) or protection tunnel, Tunnel (24) of a next ring, Aggregation ring (1), according to a fault condition of the next ring, Aggregation ring (1).

7. The apparatus according to claim 5, wherein the protection switch module is configured to perform protection switching or switchback processing by means of:
when the status change is fault occurrence and the fault influences the traffic of the working tunnel, Tunnel (3) and the master inter-ring node (C1) needs not to be switched, switching the traffic of the inter-ring services on the working tunnel, Tunnel (3) onto the protection tunnel, Tunnel (4), and transmitting the traffic on the protection tunnel, Tunnel (4) to the master inter-ring node (C1).

## Patentansprüche

1. Interringdienst-Schutzverfahren, das Folgendes umfasst:
für einen Interringdienst (1) von F1 zu C1 zu B1 und einen Dienst (3) von E1 zu C1 zu B1, mit einem selben Interringknoten (C1) und Bestimmungsknoten (B1), Konfigurieren eines gemeinsam genutzten Tunnels, Tunnel (23), den C1-zu-B1-Teil, für die Interringdienste (1, 3) auf einem selben Ring, Aggregationsring (1), den die Interringdienste (1, 3) durchlaufen, und auf dem Interringknoten (C1), Ausführen einer Interring-Tunnelbindung, Festlegen eines Master-Interringknotens (C1) und eines Bereitschafts-Interringknotens (C), und Binden von Tunneln für jeden Interringdienst an einem Eintrittsknoten und einem Austrittsknoten des Interringdienstes; und
Detektieren, ob es eine Statusänderung in dem Ring gibt, den die Interringdienste (1, 3) durchlaufen, und Ausführen einer Schutzumschaltung oder Rückschaltverarbeitung, wenn es eine Statusänderung gibt;
**dadurch gekennzeichnet, dass** das Verfahren des Weiteren Folgendes umfasst:
für den Interringdienst (1) von F1 zu C1 zu B1 und den Dienst (3) von E1 zu C1 zu B1, mit einem selben Interringknoten (C1) und Bestimmungsknoten (B1), jeweiliges Konfigurieren von Tunneln für die Interringdienste (1, 3) auf verschiedenen Ringen, Zugangsringen (1, 3), die die Interringdienste (1, 3) durchlaufen;
wobei der Schritt des Ausführens einer Interring-Tunnelbindung an einem Interringknoten Folgendes umfasst:
für den Interringdienst (1) von F1 zu C1 zu B1 und den Dienst (3) von E1 zu C1 zu B1, mit einem selben Interringknoten (C1) und Bestimmungsknoten (B1), Binden des gemeinsam genutzten Tunnels, Tunnel (23), den die Interringdienste (1, 3) auf demselben Ring, Aggregationsring (1), durchlaufen, und der jeweils konfigurierten Tunnel (1, 3), die die Interringdienste (1, 3) auf verschiedenen Ringen, Zugangsringen (1, 3), durchlaufen, als einen einzigen Tunnel; und
wobei der Schritt des Konfigurierens eines gemeinsam genutzten Tunnels für die Interringdienste auf einem selben Ring, den die Interringdienste durchlaufen, Folgendes umfasst:
für den Interringdienst (1) von F1 zu C1 zu B1 und den Dienst (3) von E1 zu C1 zu B1, mit einem selben Interringknoten (C1) und Bestimmungsknoten (B1), Konfigurieren eines gemeinsam genutzten Arbeitstunnels, Tunnel (23), den C1-zu-B1-Teil, und eines Schutztunnels, Tunnel (24), den C1-zu-C-zu-B-zu-A-zu-A1-zu-B1-Teil, für die Interringdienste (1, 3) auf demselben Ring, Aggregationsring (1), den die Interringdienste (1, 3) durchlaufen.

2. Verfahren nach Anspruch 1, wobei der Schritt des Detektierens, ob es eine Statusänderung in dem Ring gibt, den die Interringdienste durchlaufen, Folgendes umfasst:
Detektieren, ob es eine Statusänderung in dem Ring gibt, den die Interringdienste (1, 3) durchlaufen, durch eine Fehlerdetektionsmeldung, und wenn es eine Statusänderung in dem Ring gibt, Benachrichtigen der Knoten auf dem Ring über die Statusänderungsinformationen, wobei die Statusänderung das Eintreten eines Fehlers und das Verschwinden eines Fehlers enthält.

3. Verfahren nach Anspruch 2, wobei der Schritt des Ausführens einer Schutzumschaltung oder Rückschaltverarbeitung, wenn es eine Statusänderung gibt, umfasst:
dass ein Knoten, der die Statusänderungsinformationen empfängt, eine Schutzumschaltung oder Rückschaltverarbeitung auf folgende Weise ausführt:
wenn die Statusänderung das Eintreten eines Fehlers ist und der Fehler einen Datenverkehr des Arbeitstunnels, Tunnel (3), beeinflusst und der Master-Interringknoten (C1) umgeschaltet werden muss, so schalten die Knoten in einem Fehlerring den Datenverkehr im Arbeitstunnel, Tunnel (3), auf den Schutztunnel, Tunnel (4), und senden den Datenverkehr im Schutztunnel, Tunnel (4), an den Bereitschafts-Interringknoten (C), und der Bereitschafts-Interringknoten (C) sendet den Datenverkehr im Arbeitstunnel, Tunnel (23), oder Schutztunnel, Tunnel (24), eines nächsten Rings, Aggregationsring (1), gemäß einem Fehlerzustand des nächsten Rings, Aggregationsring (1).

4. Verfahren nach Anspruch 2, wobei der Schritt des Ausführens einer Schutzumschaltung oder Rückschaltverarbeitung, wenn es eine Statusänderung gibt, umfasst, dass der Knoten, der die Statusänderungsinformationen empfängt, eine Schutzumschaltung oder Rückschaltverarbeitung, auf folgende Weise ausführt:
wenn die Statusänderung das Eintreten eines Fehlers ist und der Fehler den Datenverkehr des Arbeitstunnels, Tunnel (3), beeinflusst und der Master-Interringknoten (C1) nicht umgeschaltet werden muss, so schaltet der Knoten in dem Fehlerring, Zugangsring (1), den Datenverkehr der Interringdienste im Arbeitstunnel, Tunnel (3), auf den Schutztunnel, Tunnel (4), und sendet den Datenverkehr im Schutztunnel, Tunnel (4), an den Master-Interringknoten (C1).

5. Interringdienst-Schutzvorrichtung, die ein Tunnelkonfigurationsmodul, ein Fehlerdetektionsmodul, ein Fehlerbenachrichtigungsmodul und ein Schutzschaltermodul umfasst, wobei
das Tunnelkonfigurationsmodul dafür konfiguriert ist, für den Interringdienst (1) von F1 zu C1 zu B1 und den Dienst (3) von E1 zu C1 zu B1, mit einem selben Interringknoten (C1) und Bestimmungsknoten (B1), einen gemeinsam genutzten Tunnel, Tunnel (23), der C1-zu-B1-Teil, für die Interringdienste (1, 3) auf einem selben Ring, Aggregationsring (1), den die Interringdienste (1, 3) durchlaufen, zu konfigurieren und auf dem Interringknoten (C1) eine Interring-Tunnelbindung auszuführen, einen Master-Interringknoten (C1) und einen Bereitschafts-Interringknoten (C) festzulegen, und Tunnel für jeden Interringdienst an einem Eintrittsknoten und einem Austrittsknoten des Interringdienstes zu binden; und
das Fehlerdetektionsmodul dafür konfiguriert ist zu detektieren, ob es eine Statusänderung in dem Ring gibt, den die Interringdienste (1, 3) durchlaufen;
das Fehlerbenachrichtigungsmodul dafür konfiguriert ist, Knoten auf dem Ring über die Statusänderungsinformationen zu benachrichtigen, wenn das Fehlerdetektionsmodul eine Statusänderung detektiert; und
das Schutzschaltermodul dafür konfiguriert ist, eine Schutzumschaltung oder Rückschaltverarbeitung auszuführen, wenn es eine Statusänderung in dem Ring gibt, den die Interringdienste (1, 3) durchlaufen;
**dadurch gekennzeichnet, dass**
das Tunnelkonfigurationsmodul des Weiteren dafür konfiguriert ist, für den Interringdienst (1) von F1 zu C1 zu B1 und den Dienst (3) von E1 zu C1 zu B1, mit einem selben Interringknoten (C1) und Bestimmungsknoten (B1), jeweils Tunnel für die Interringdienste (1, 3) auf verschiedenen Ringen, Zugangsringen (1, 3), die die Interringdienste (1, 3) durchlaufen, zu konfigurieren;
wobei das Tunnelkonfigurationsmodul dafür konfiguriert ist, eine Interring-Tunnelbindung auf folgende Weise auszuführen: für den Interringdienst (1) von F1 zu C1 zu B1 und den Dienst (3) von E1 zu C1 zu B1, mit einem selben Interringknoten (C1) und Bestimmungsknoten (B1),
Binden des gemeinsam genutzten Tunnels, Tunnel (23), den die Interringdienste (1, 3) auf demselben Ring, Aggregationsring (1), durchlaufen, und der jeweils konfigurierten Tunnel (1, 3), die die Interringdienste (1, 3) auf verschiedenen Ringen, Zugangsringen (1, 3), durchlaufen, als einen einzigen Tunnel; und
wobei das Tunnelkonfigurationsmodul dafür konfiguriert ist, einen gemeinsam genutzten Tunnel für die Interringdienste auf folgende Weise zu konfigurieren:
für den Interringdienst (1) von F1 zu C1 zu B1 und den Dienst (3) von E1 zu C1 zu B1, mit einem selben Interringknoten (C1) und Bestimmungsknoten (B1), Konfigurieren eines gemeinsam genutzten Arbeitstunnels, Tunnel (23), den C1-zu-B1-Teil, und eines Schutztunnels, Tunnel (24), den C1-zu-C-zu-B-zu-A-zu-A1-zu-B1-Teil, für die Interringdienste (1, 3) auf demselben Ring, Aggregationsring (1), den die Interringdienste (1, 3) durchlaufen.

6. Vorrichtung nach Anspruch 5, wobei das Schutzschaltermodul dafür konfiguriert ist, eine Schutzumschaltung oder Rückschaltverarbeitung auf folgende Weise auszuführen:
wenn die Statusänderung das Eintreten eines Fehlers ist und der Fehler einen Datenverkehr des Arbeitstunnels, Tunnel (3), beeinflusst und der Master-Interringknoten (C1) umgeschaltet werden muss, Umschalten des Datenverkehrs im Arbeitstunnel, Tunnel (3), auf den Schutztunnel, Tunnel (4), Senden des Datenverkehrs im Schutztunnel, Tunnel (4), an den Bereitschafts-Interringknoten (C), und Senden des Datenverkehrs im Arbeitstunnel, Tunnel (23), oder Schutztunnel, Tunnel (24), eines nächsten Rings, Aggregationsring (1), gemäß einem Fehlerzustand des nächsten Rings, Aggregationsring (1).

7. Vorrichtung nach Anspruch 5, wobei das Schutzschaltermodul dafür konfiguriert ist, eine Schutzumschaltung oder Rückschaltverarbeitung auf folgende Weise auszuführen:
wenn die Statusänderung das Eintreten eines Fehlers ist und der Fehler den Datenverkehr des Arbeitstunnels, Tunnel (3), beeinflusst und der Master-Interringknoten (C1) nicht umgeschaltet werden muss, Umschalten des Datenverkehrs der Interringdienste im Arbeitstunnel, Tunnel (3), auf den Schutztunnel, Tunnel (4), und Senden des Datenverkehrs im Schutztunnel, Tunnel (4), an den Master-Interringknoten (C1).

## Revendications

1. Procédé de protection de service inter-anneau, comprenant :
pour un service inter-anneau (1), de F1 à C1 à B1, et pour un service (3), de E1 à C1 à B1, avec un même noeud inter-anneau (C1) et un noeud de destination (B1), la configuration d'un tunnel partagé, Tunnel (23), la partie C1 à B1, pour les services inter-anneau (1, 3) sur un même anneau, Anneau d'agrégation (1), que les services inter-anneau (1, 3) traversent, et sur le noeud inter-anneau (C1), l'exécution d'une liaison de tunnels inter-anneau, la désignation d'un noeud inter-anneau principal (C1) et d'un noeud inter-anneau de veille (C), et la liaison de tunnels pour chaque service inter-anneau sur un noeud d'entrée et sur un noeud de sortie du service inter-anneau ; et
la détection s'il y a un changement de statut dans l'anneau que les services inter-anneau (1, 3) traversent, et l'exécution d'une commutation de protection ou d'un traitement d'inversion lorsqu'il y a un changement de statut ;
**caractérisé en ce que** le procédé comprend en outre :
pour un service inter-anneau (1), de F1 à C1 à B1, et pour un service (3), de E1 à C1 à B1, avec un même noeud inter-anneau (C1) et un noeud de destination (B1), respectivement la configuration de tunnels pour les services inter-anneau (1, 3) sur des anneaux différents, Anneaux d'accès (1, 3), que les services inter-anneau (1, 3) traversent ;
dans lequel l'étape de l'exécution d'une liaison de tunnels inter-anneau sur un noeud inter-anneau comprend :
pour un service inter-anneau (1), de F1 à C1 à B1, et pour un service (3), de E1 à C1 à B1, avec un même noeud inter-anneau (C1) et un noeud de destination (B1), la liaison du tunnel partagé, Tunnel (23), que les services inter-anneau (1, 3) traversent sur le même anneau, Anneau d'agrégation (1), et des tunnels (1, 3) configurés respectivement, que les services inter-anneau (1, 3) traversent sur différents anneaux, Anneaux d'accès (1, 3), en tant qu'un tunnel ; et
dans lequel l'étape de la configuration d'un tunnel partagé pour les services inter-anneau sur un même anneau que les services inter-anneau traversent comprend :
pour un service inter-anneau (1), de F1 à C1 à B1, et pour un service (3), de E1 à C1 à B1, avec un même noeud inter-anneau (C1) et un noeud de destination (B1), la configuration d'un tunnel de fonctionnement partagé, Tunnel (23), la partie C1 à B1, et un tunnel de protection, Tunnel (24), la partie C1 à C à B à A à A1 à B1, pour les services inter-anneau (1, 3) sur le même anneau, Anneau d'agrégation (1), que les services inter-anneau (1, 3) traversent.

2. Procédé selon la revendication 1, dans lequel l'étape de la détection s'il y a un changement de statut dans l'anneau que les services inter-anneau traversent comprend :
la détection s'il y a un changement de statut dans l'anneau que les services inter-anneau (1, 3) traversent par un message de détection de défaut, et, s'il y a un changement de statut dans l'anneau, la notification des informations de changement de statut aux noeuds sur l'anneau, dans lequel le changement de statut comprend une survenance de défaut et une disparition de défaut.

3. Procédé selon la revendication 2, dans lequel l'étape de l'exécution d'une commutation de protection ou d'un traitement d'inversion lorsqu'il y a un changement de statut comprend :
un noeud, qui reçoit les informations de changement de statut, effectue une commutation de protection ou un traitement d'inversion au moyen de :
lorsque le changement de statut est une survenance de défaut et le défaut influence un trafic du tunnel de fonctionnement, Tunnel (3), et le noeud inter-anneau principal (C1) doit être commuté, les noeuds, dans un anneau ayant un défaut, commutent le trafic du tunnel de fonctionnement, Tunnel (3), sur le tunnel de protection, Tunnel (4), et transmettent le trafic du tunnel de protection, Tunnel (4), au noeud inter-anneau de veille (C), et le noeud inter-anneau de veille (C) transmet le trafic sur le tunnel de fonctionnement, Tunnel (23), ou sur le tunnel de protection, Tunnel (24), d'un anneau suivant, Anneau d'agrégation (1), en fonction d'un état de défaut de l'anneau suivant, Anneau d'agrégation (1).

4. Procédé selon la revendication 2, dans lequel l'étape de l'exécution d'une commutation de protection ou d'un traitement d'inversion lorsqu'il y a un changement de statut comprend : le noeud, qui reçoit les informations de changement de statut, effectue une commutation de protection ou un traitement d'inversion au moyen de :
lorsque le changement de statut est une survenance de défaut et le défaut influence le trafic du tunnel de fonctionnement, Tunnel (3), et le noeud inter-anneau principal (C1) doit être commuté, les noeuds dans l'anneau ayant un défaut, Anneau d'accès (1), commutent le trafic des services inter-anneau du tunnel de fonctionnement, Tunnel (3), sur le tunnel de protection, Tunnel (4), et transmettent le trafic du tunnel de protection, Tunnel (4), au noeud inter-anneau principal (C1).

5. Appareil de protection de service inter-anneau comprenant un module de configuration de tunnel, un module de détection de défaut, un module de notification de défaut et un module de commutation de protection, dans lequel :
le module de configuration de tunnel est configuré pour effectuer : pour un service inter-anneau (1), de F1 à C1 à B1, et pour un service (3), de E1 à C1 à B1, avec un même noeud inter-anneau (C1) et un noeud de destination (B1), la configuration d'un tunnel partagé, Tunnel (23), la partie C1 à B1, pour les services inter-anneau (1, 3) sur un même anneau, Anneau d'agrégation (1), que les services inter-anneau (1, 3) traversent, et sur le noeud inter-anneau (C1), l'exécution d'une liaison de tunnels inter-anneau, la désignation d'un noeud inter-anneau principal (C1) et d'un noeud inter-anneau de veille (C), et la liaison de tunnels pour chaque service inter-anneau sur un noeud d'entrée et sur un noeud de sortie du service inter-anneau ; et
le module de détection de défaut est configuré pour effectuer : la détection s'il y a un changement de statut dans l'anneau que les services inter-anneau (1, 3) traversent ;
le module de notification de défaut est configuré pour effectuer : la notification des informations de changement de statut aux noeuds sur l'anneau lorsque le module de détection de défaut détecte un changement de statut ; et
le module de commutation de protection est configuré pour effectuer :
l'exécution d'une commutation de protection ou d'un traitement d'inversion lorsqu'il y a un changement de statut dans l'anneau que les services inter-anneau (1, 3) traversent ;
**caractérisé en ce que** :
le module de configuration de tunnel est en outre configuré pour effectuer : pour un service inter-anneau (1), de F1 à C1 à B1, et pour un service (3), de E1 à C1 à B1 avec un même noeud inter-anneau (C1) et un noeud de destination (B1) respectivement, la configuration de tunnels pour les services inter-anneau (1, 3) sur des anneaux différents, Anneaux d'accès (1, 3), que les services inter-anneau (1, 3) traversent ;
dans lequel le module de configuration de tunnel est configuré pour effectuer l'exécution d'une liaison de tunnels inter-anneau au moyen de : pour un service inter-anneau (1), de F1 à C1 à B1, et pour un service (3), de E1 à C1 à B1, avec un même noeud inter-anneau (C1) et un noeud de destination (B1),
la liaison du tunnel partagé, Tunnel (23), que les services inter-anneau (1, 3) traversent sur le même anneau, Anneau d'agrégation (1), et des tunnels (1, 3) configurés respectivement, que les services inter-anneau (1, 3) traversent sur différents anneaux, Anneaux d'accès (1, 3), en tant qu'un tunnel ; et
dans lequel le module de configuration de tunnel est configuré pour effectuer la configuration d'un tunnel partagé pour les services inter-anneau au moyen de :
pour un service inter-anneau (1), de F1 à C1 à B1, et pour un service (3), de E1 à C1 à B1, avec un même noeud inter-anneau (C1) et un noeud de destination (B1), la configuration d'un tunnel de fonctionnement partagé, Tunnel (23), la partie C1 à B1, et un tunnel de protection, Tunnel (24), la partie C1 à C à B à A à A1 à B1, pour les services inter-anneau (1, 3) sur le même anneau, Anneau d'agrégation (1), que les services inter-anneau (1, 3) traversent.

6. Appareil selon la revendication 5, dans lequel le module de commutation de protection est configuré pour effectuer l'exécution d'une commutation de protection ou d'un traitement d'inversion au moyen de :
lorsque le changement de statut est une survenance de défaut et le défaut influence un trafic du tunnel de fonctionnement, Tunnel (3), et le noeud inter-anneau principal (C1) doit être commuté, la commutation du trafic du tunnel de fonctionnement, Tunnel (3), sur le tunnel de protection, Tunnel (4), la transmission du trafic du tunnel de protection, Tunnel (4), au noeud inter-anneau de veille (C), et la transmission du trafic sur le tunnel de fonctionnement, Tunnel (23), ou sur le tunnel de protection, Tunnel (24), d'un anneau suivant, Anneau d'agrégation (1), en fonction d'un état de défaut de l'anneau suivant, Anneau d'agrégation (1).

7. Appareil selon la revendication 5, dans lequel le module de commutation de protection est configuré pour effectuer l'exécution d'une commutation de protection ou d'un traitement d'inversion au moyen de :
lorsque le changement de statut est une survenance de défaut et le défaut influence le trafic du tunnel de fonctionnement, Tunnel (3), et le noeud inter-anneau principal (C1) doit être commuté, la commutation du trafic des services inter-anneau du tunnel de fonctionnement, Tunnel (3), sur le tunnel de protection, Tunnel (4), et la transmission du trafic du tunnel de protection, Tunnel (4), au noeud inter-anneau principal (C1).
